# EUROPEAN PATENT APPLICATION

(11) **EP 2 301 811 A1**
(43) Date of publication of application: **30.03.2011**
(21) Application number: 09171056.6
(22) Date of filing: 23.09.2009
(51) Int. Cl.: B60R 19/56

(54) **Side guard system for a vehicle and method of assembling a side guard system**

(71) Applicant: Oy Parlok AB, 21600 Parainen (FI)
(72) Inventor: Sillantaka, Kari, 23800, LAITILA (FI); Lehtonen, Jaakko, 20810, TURKU (FI); Jakobsson, Nicklas, 21600, PARAINEN (FI)
(74) Representative: Suominen, Kaisa Liisa

(57) **Abstract**

The invention relates to a side guard system (1) for a vehicle (2) and a method of assembling a side guard system (1) for a vehicle (2). The side guard system (1) comprises
- first and second parallel longitudinal supports (11a, 11b) arranged at a distance from each other,
- a panel (12) arranged between the supports and attached to the supports at its longitudinal sides (15a, 15b), and
- locking means (13a-d) arranged to releasably lock the panel (12) between the supports (11a, 11b).

The supports (11a, 11b) comprise rail means (16a, 16b). The panel comprises counterparts (25a, 25b, 125a, 125b) fitted for the rail means on its longitudinal sides (15a, 15b). The rail means, the counterparts and the locking means configure a movable fitting of the panel (12) in relation to the supports (11a, 11b) when the panel is locked between the supports.

## Description

### TECHNICAL FIELD OF THE INVENTION

The invention relates to a side guard system for a vehicle and a method of assembling a side guard system for a vehicle as presented in the preambles of the independent claims disclosed further below. The invention especially relates to a new kind of a side guard system to be arranged alongside a lorry or a trailer or similar large wheel diameter vehicle.

### PRIOR ART

The purpose of a side guard or a side valance system attached to a lorry or similar commercial vehicle is to prevent for example people from falling accidentally under the vehicle. The purpose of a side guard system is particularly to protect pedestrians, cyclists or the like from being injured by the wheels of a lorry. Side guard systems are subject to various regulations, for example in the EU the bottom edge of a side guard system attached along the sides of a lorry is allowed to be no more than 550 mm from the ground and the top edge no more than 350 mm from the side of a lorry platform. However, the side guard system should be preferably removable for allowing access under the vehicle, if desired, e.g. for reasons of maintenance.

German utility model publication DE 202006014466 U1 presents a side guard with two longitudinally positioned profiles and an advertising sheet between them. The upper and lower edges of the advertising sheet are firmly fixed to the profiles e.g. by screws. The assembling of the advertising sheet into the profiles is laborious and at least sometimes time-consuming. Use of different materials firmly fixed together may cause stresses and deformation in the structure e.g. by thermal expansion forces. Thus, the appearance of the advertising sheet or the profiles may deteriorate. Even breakdown of the components is possible in the long run.

### THE AIM AND BRIEF DESCRIPTION OF THE INVENTION

An object of the present invention is to reduce or even to eliminate e.g. the above-mentioned problems appearing in the prior art.

An object of the present invention is especially to obtain a side guard system to be arranged alongside a commercial vehicle, especially a lorry or the like, the manufacturing, assembling and maintenance of which is inexpensive and easy.

An object of the present invention is especially to obtain a side guard system in which components of different materials can be used without the risk of deformation or breakdown of the structure by thermal expansion stresses.

In order to realize the above-mentioned objects, among other things, the present invention is characterised by what is presented in the characterising parts of the enclosed independent claims.

The embodiments and advantages mentioned in this text are in suitable parts applicable to the side guard system as well as the method according to the invention, even if this is not always specifically mentioned.

A typical side guard system for a commercial vehicle according to the invention comprises
- first and second at least mainly parallel longitudinal supports arranged at a distance from each other,
- a panel arranged between the supports and attached to the supports at its longitudinal sides,
- locking means arranged to releasably lock the panel between the supports,
The supports comprise rail means and the panel comprises on its longitudinal sides counterparts fitted for the rail means. The counterparts can be e.g. protrusions on the panel surface, which fit to the rails in such a way that they can be slid in the rails. The rail means, the counterparts and the locking means configure a movable fitting of the panel in relation to the supports when the panel is locked between the supports.

The shape of the rail means and the counterparts according to the invention can be selected as needed, they just have to fit to each other in such a way that the panel can be locked between the supports in a loose fitting. The rail means can e.g. be a plain straight protrusion, or shaped as a profile or a rail with the shape of a letter such as I, J, L, U or C. Also the counterpart can be formed e.g. as a plain straight protrusion or it can be shaped e.g. as a profile or a rail with the shape of a letter such as I, J, L, U or C. The counterpart can also be just a straight panel edge having no specific bends or forms.

A typical method of assembling a side guard system for a commercial vehicle according to the invention comprises at least following steps
- mounting a panel between two parallel longitudinal supports arranged at a distance from each other,
- arranging counterparts on the longitudinal sides of the panel in rails in the supports,
- locking the panel between the supports into a movable fitting in relation to the supports.

A commercial vehicle is in this context a vehicle that is used for carrying goods or passengers, such as a lorry or a truck, a trailer, a semi-trailer, a van, a bus or a coach.

The supports can be e.g. metal bars or profiles, e.g. made of steel, aluminium or a suitable alloy.

The panel can be made of e.g. metal or plastics, e.g. of HDPE (high density polyethylene), PP (polypropylene), PC (polycarbonate), ABS (acrylonitrile butadiene styrene). The panel can be made e.g. by extrusion molding. Especially if the panel is made of plastics, some stiffening forms such as bosses, angles and zones of thicker panel material can be formed in the panel. The design of the panel can also be modified e.g. for aerodynamic reasons or appearance reasons. For example an aerodynamic device, such as a spoiler can be arranged on an edge of the panel or between the longitudinal edges.

Normally, when the side guard system is mounted on a vehicle, the longitudinal direction, i.e. the direction of the supports, is at least mainly the same as the travelling direction of the vehicle. The supports are normally arranged mainly horizontally. The plane of the panel is normally arranged at least mainly vertical. In this case the first longitudinal support can be situated at least mainly above the second longitudinal support. It is also possible to mount the panel into another position. For example the longitudinal supports can be arranged mainly vertically.

Locking means can be e.g. a bolt and a nut, a locking pin or a plug which can be secured to the system in such a way that it prevents the panel from sliding away from the rail means.

Now it has thus been surprisingly found that a side guard system can be made better by arranging the rail means, the counterparts and the locking means to configure a movable fitting of the panel in relation to the supports. In other words the panel can be left somewhat loosely in the rail means of the supports when the panel is locked between the supports. In one embodiment the panel is left movable in the longitudinal direction. In one embodiment the panel is left movable in a direction perpendicular to the longitudinal direction. This movable fitting has the advantage that components of different materials with different thermal expansion coefficients can be used without the risk of deformation or breakdown of the structure by thermal expansion stresses. This kind of structure can be made very simple, only a few components are needed.

One of the greatest advantages of the invention is that the side guard system can easily be manufactured with a height most suitable to a given vehicle.

One of the greatest advantages of the invention is that the side guard system can easily be designed with desired aerodynamic features, thereby improving fuel efficiency of the vehicle.

One of the greatest advantages of the invention is that the side guard system can be assembled easily, even entirely by hand, possibly even without any tools.

In an embodiment of the invention the movable fitting means that when the panel is locked between the supports it can move e.g. 0,5-50 mm, 1-20 mm, 2-10 mm or 2.5-5 mm in the longitudinal direction, e.g. horizontally in the travelling direction of a vehicle when mounted to one.

In an embodiment of the invention the movable fitting means that when the panel is locked between the supports it can move e.g. 0,5-50 mm, 1-20 mm, 2-10 mm or 2.5-5 mm in a direction perpendicular to the longitudinal direction, e.g. vertically when mounted to a vehicle.

In an embodiment of the invention the movable fitting means that when the panel is locked between the supports it can move e.g. 0.1-4 mm, 0.3-2 mm, 0.4-1.5 mm or 0.5-1 mm in a direction perpendicular to the longitudinal direction, e.g. horizontally when mounted to a vehicle.

In an embodiment of the invention the panel can simply be slid into rails of longitudinal supports of a side guard system. The panel is slid into its desired position between the supports and locked relative to the supports. Suitable counterparts on the sides of the panel fit rails on the supports and keep the panel firmly between the supports. Sliding a panel into rails on the supports is very simple and easy to do. The rails and counterparts can easily be formed such that fitting between them is not too tight. Thus, when assembling the side guard system according to the invention there is no need for powerful and complicated tools or great forces. The assembling can be done by hand.

In an embodiment of the invention the counterparts are protrusions formed in the panel of the panel material. For example the counterparts can be formed by pressing a part of the panel material at the longitudinal side of the panel in such a way that the material forms a protrusion or a boss which is elevated from the general plane of the side of the panel. This protrusion or boss is formed to fit the rail means in the support. This is a simple and effective way of providing suitable counterparts.

In an embodiment of the invention counterparts are made of components or material different from the material of the panel. Counterparts can for example be hooks, plugs, pegs or bolts, attached to the panel.

In an embodiment of the invention at least one of the counterparts is a longitudinal shape extending along substantially the whole side of the panel. If the panel is made by extruding, this sort of a counterpart can be formed as an integral part with the panel, simultaneously with the rest of the panel. If arranged on the longitudinal side of the panel, this counterpart can be adapted to be slid into the rail of the support.

In an embodiment of the invention the counterparts of at least one side of the panel are snap-fit joint means, adapted to fit with the rail means. If this counterpart is arranged on a longitudinal side of the panel, the panel can be brought into the movable fitting with the support with movement in a direction perpendicular to the longitudinal direction.

In an embodiment of the invention the locking means comprises end pieces adapted to be firmly fitted at the longitudinal ends of the supports. The end piece may e.g. be attached to the support with a friction joint. One possible end piece is a rubber or plastic plug, a part of which fits firmly inside the support bar or profile. Locking means can e.g. close or block the end of the rail means thus preventing the panel from sliding out from the rail. An end piece can be of such size that when arranged onto the end of the support it covers the edges of the supports, thereby preventing injuries due to human contact with possibly sharp edges.

In an embodiment of the invention the end piece comprises second rail means. These are arranged to be fit for sides of the panel perpendicular to the longitudinal direction. This solution provides added support to the panel. At the same time it provides the inventive idea of a movable fitting between the end piece and the panel.

In an embodiment of the invention the side guard system is releasable and adjustably mounted to the vehicle. This may be achieved e.g. with suitable releasable and adjustable fastening means on the supports. This makes it possible to adjust the position of the supports relative to the vehicle.

In an embodiment of the invention, when the panel is locked between the supports, the panel is fixed on at least one of the supports on at least one point with a fastening means, such as a rivet or a screw. This fixing point can be e.g. near the longitudinal midpoint of the panel. This way other parts, e.g. the ends, of the panel still have the possibility to move in the supports, e.g. due to thermal expansion.

### BRIEF DESCRIPTION OF THE FIGURES

The invention is described below in more detail with reference to the enclosed schematic drawing, in which
- Figure 1: shows a perspective view of a side guard system according to the invention mounted on a trailer,
- Figure 2: shows a perspective view of a side guard system according to the invention,
- Figure 3: shows an exploded view of a detail of a side guard system according to a first embodiment of the invention,
- Figure 4: shows an exploded view of a detail of a side guard system according to a second embodiment of the invention,
- Figure 5: shows a perspective view of an end of a longitudinal support according to an embodiment of the invention, and
- Figure 6: shows a cross section of a longitudinal support according to a further embodiment of the invention.

### DETAILED DESCRIPTION OF THE EXAMPLES OF THE FIGURES

For the sake of clarity, in the following the same reference numbers may be used for corresponding components of different embodiments.

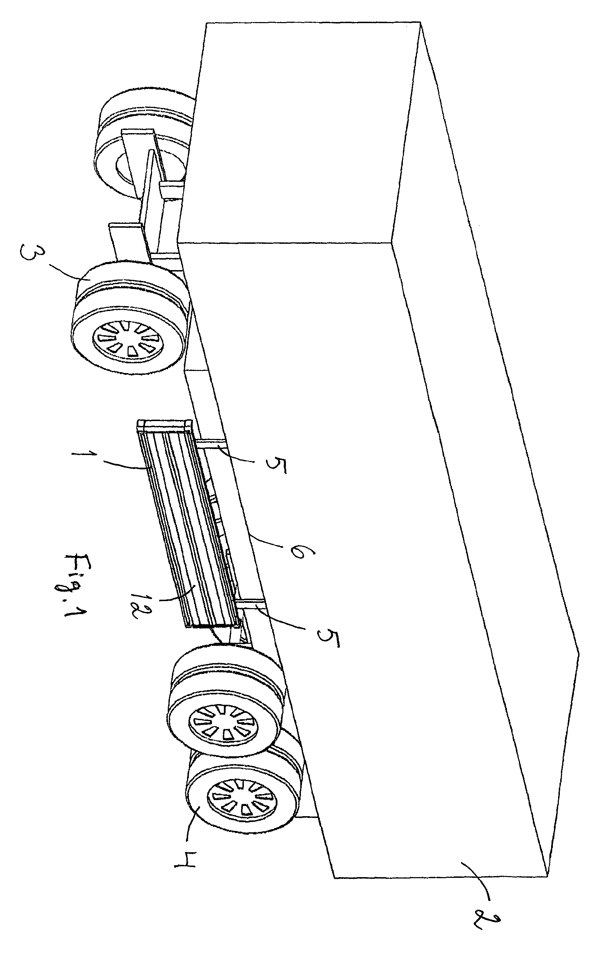

Figure 1 shows a side guard system 1 according to the invention mounted in a trailer 2, between its front wheels 3 and rear wheels 4. The side guard system 1 prevents for example pedestrians or cyclists from being injured by the wheels 3, 4. The side guard system 1 is attached releasably and adjustably to vertical beams 5. This makes possible to adjust the position of the side guard system 1 relative to the vehicle 2. The side guard system 1 is arranged to be removable from the vertical beams 5 for allowing access under the vehicle 2, if desired, e.g. for reasons of maintenance. The vertical beams 5 are supported on the chassis 6 of the trailer 2.

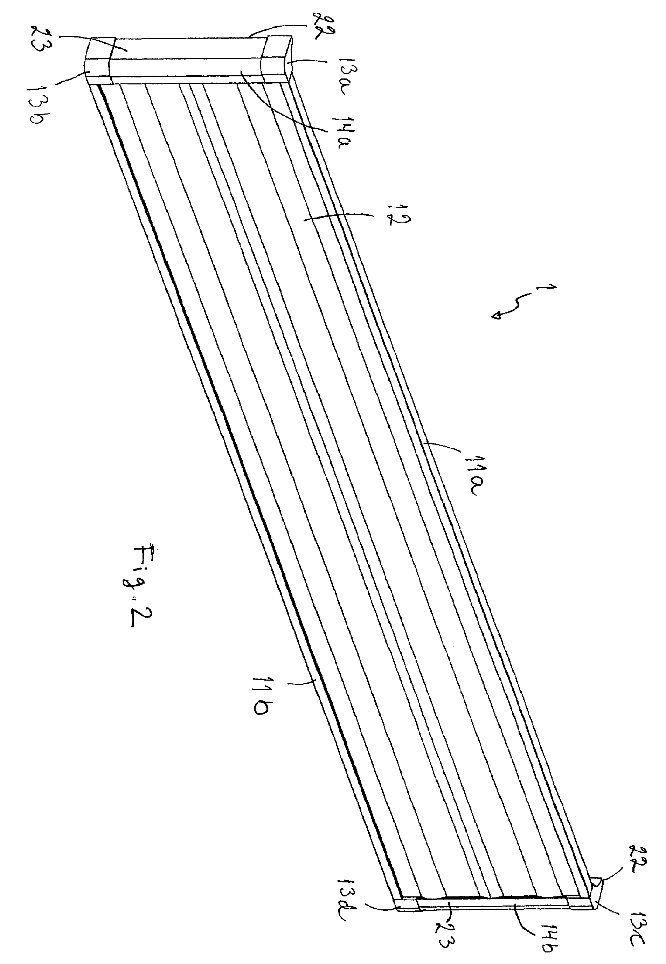

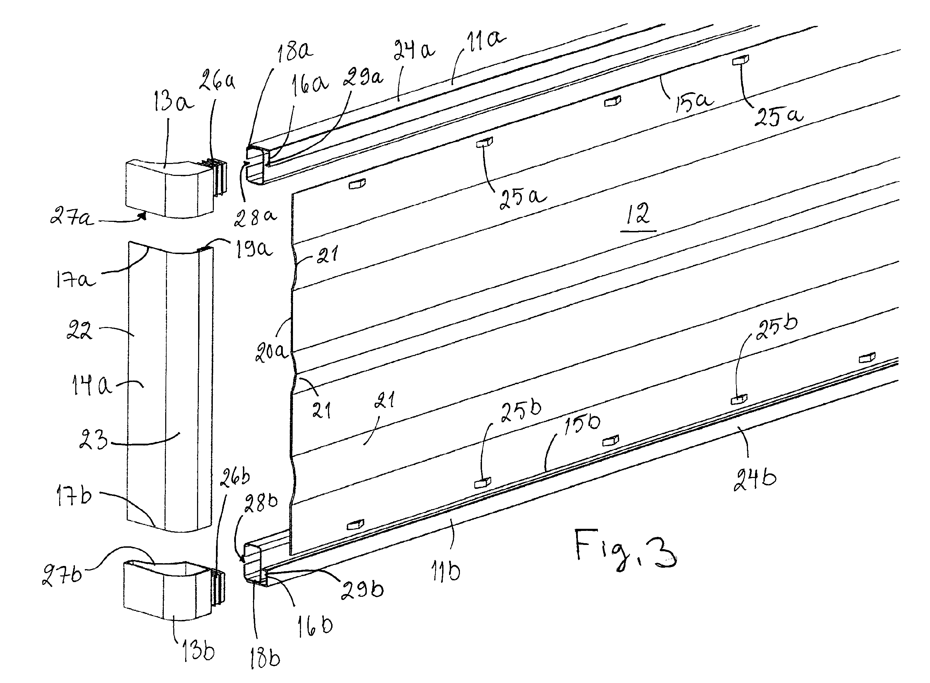

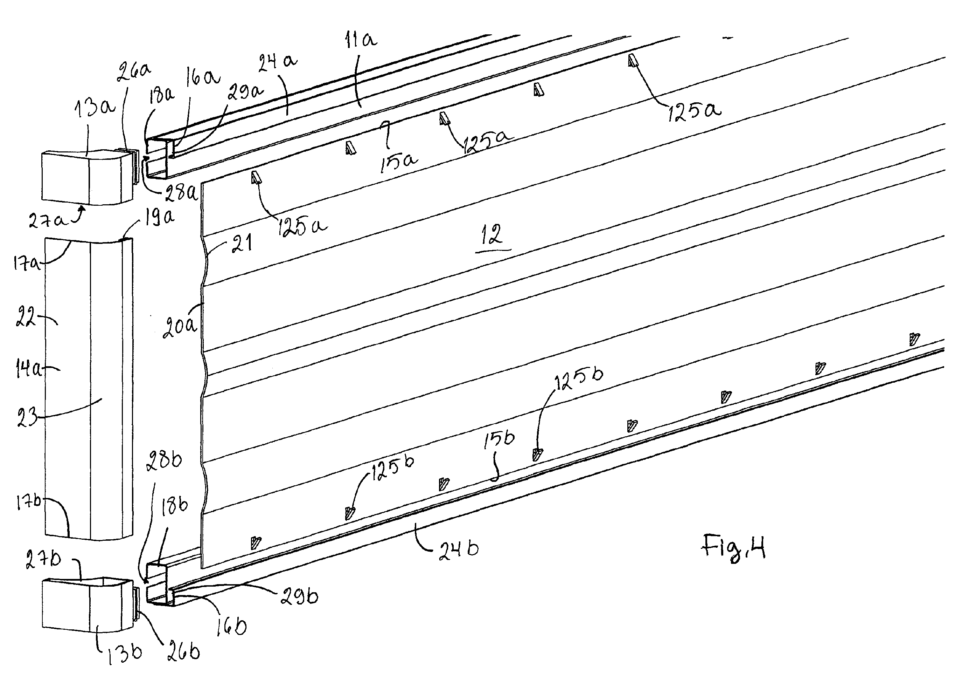

Figure 2 shows a perspective view of a side guard system 1 according to the invention. Figures 3 and 4 show exploded views of two possible embodiments of the side guard system 1. The side guard system 1 comprises two parallel horizontal supports 11a, 11b, a panel 12, four end pieces 13a, 13b, 13c, 13d and two parallel vertical end profiles 14a, 14b. The components 11-14 can be made of any suitable material, e.g. the horizontal supports 11a and 11b may be made of steel, aluminium or other metal or plastics, the panel 12, the end pieces 13 and the end profiles 14 may be of plastic, such as HDPE. The horizontal longitudinal edges 15a and 15b of the panel 12 are inserted into suitable grooves or rails 16a and 16b in the horizontal supports 11a, 11b. The ends 17a, 17b of the vertical end profiles 14a, 14b are inserted inside the end pieces 13a-d and they are held together with a friction joint. The end pieces 13a-d are partly inserted inside the end openings 18a, 18b of the supports and they are kept together with a friction joint. The vertical end profiles 14a, 14b comprise a vertical rail means 19a, e.g. a groove or rail, into which the vertical edges 20a of the panel 12 are fitted. The panel 12 comprises a number of longitudinal forms 21, intended to stiffen the panel 12. The panel 12 might also be formed e.g. with any other suitable shapes on it or substantially flat. The vertical edges 22 of the end profiles have been turned towards the vehicle 2 and vertical outer edges 23 have been rounded or bevelled in order to improve aerodynamics of the side guard system 1 and in order to lessen possible injuries to pedestrians etc. in case of an accident.

In Figure 3 each longitudinal support 11a, 11b is basically a C-profile, on which is attached a letter J -shaped longitudinal piece 24a, 24b, forming the longitudinal rail 16a, 16b. Protrusions 25a, 25b fitting loosely into the rail 16a, 16b are situated on the longitudinal edges 15a, 15b of the panel. In Fig. 2 the protrusions 25a, 25b have been formed by pressing several relatively small parts of the panel material to become elevated from the general plane of the panel 12. The end pieces 13a, 13b comprise friction elements 26a, 26b to be inserted into the openings 18a, 18b at the ends of the horizontal supports 11a, 11b. The end pieces 13a-d also comprise openings 27a, 27b for the ends 17a, 17b of the vertical end profiles 14a, 14b. The horizontal supports 11a, 11b comprise a horizontal slot 28a, 28b on the side intended towards the vehicle 2. This slot 28a, 28b is used for mounting the side guard system 1 on a vehicle 2 e.g. on vertical beams 5 of Fig. 1 with a screw, bolt or similar (not shown).

The assembly of the side guard system 1 of Fig. 3 is done e.g. in the following manner. The length of the end profiles 14a, 14b and the height of the panel 12 must be selected such that the supports 11a, 11b are situated at a desired distance from each other. The panel 12 is mounted on the longitudinal supports 11a, 11b with a longitudinal movement, while taking care that the protrusions 25a, 25b slide into the rails 16a, 16b. When the panel 12 is on a desired position, the end pieces 13a-d and end profiles 14a, 14b are attached to the system. One set of end pieces 13a-d and one end profile 14a, 14b may be attached to the supports 11a, 11b already before the panel 12. The end pieces 13a-d close the rails 16a, 16b thus locking the panel 12 between the supports 11a, 11b.

Figure 4 shows an exploded view of another possible solution on how the system 1 of Figure 2 may be constructed. The solution of Fig. 4 differs from the one of Fig. 3 for the part of the counterparts, i.e. the protrusions 125a, 125b. In Fig. 4 the counterparts 125a, 125b on the edges 15a, 15b of the panel 12 are snap-fit joint means. The snap-fit joint means 125a, 125b can be brought into a fitting with the rails 16a, 16b with in this case vertical movement. Naturally, the panel 12 of Fig. 4 can also be mounted with the longitudinal movement described for the solution of Fig. 3 above.

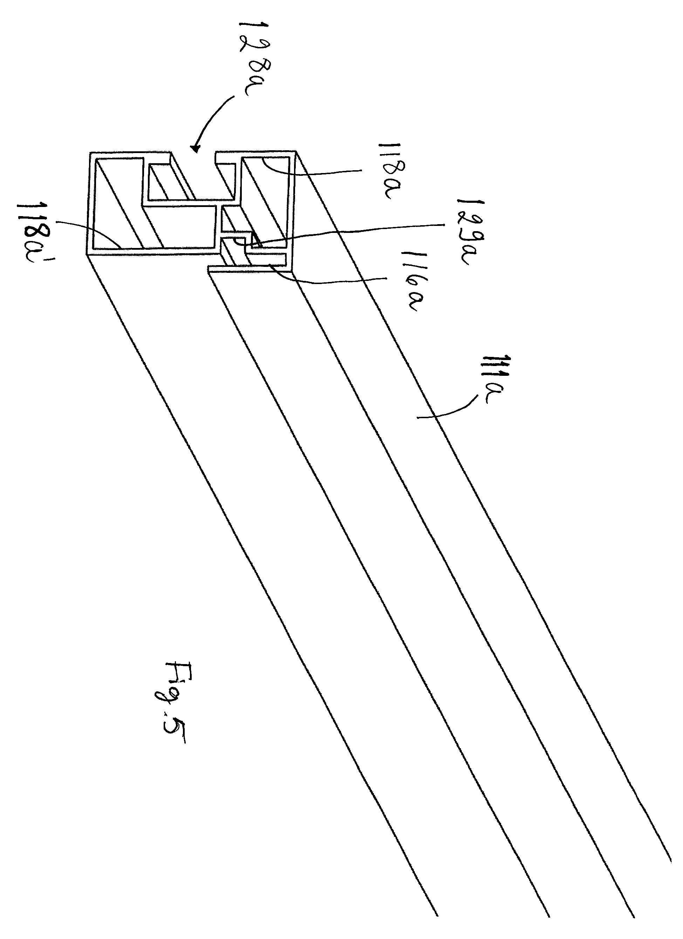

Fig. 5 shows an example of a support profile 111a. It comprises on its backside a slot 128a for a screw or similar for fixing the support to a vehicle chassis 6. A rail 116a is arranged on its front side, adapted to receive a counterpart 25a, 125a of a panel 12. The rail 116a has an element or shape 129a for the panel counterpart 25a, 125a, which is directed towards the backside, i.e. towards the vehicle 2. In Figs 3 and 4 the rails 16a, have similar shapes 29a, 29b directed away from the vehicle 2. Also the panels 12 of Figs 3 and 4 have protrusions 25a, 125a directed away from the vehicle 2. With the solution of Fig 5 the rail 116a can be made somewhat lower or less protruding from the support 111a compared to rails of Figs 3 and 4. This might be important e.g. for aerodynamic reasons. A smaller shape may also lessen the risk of injury or damage in case of an accident.

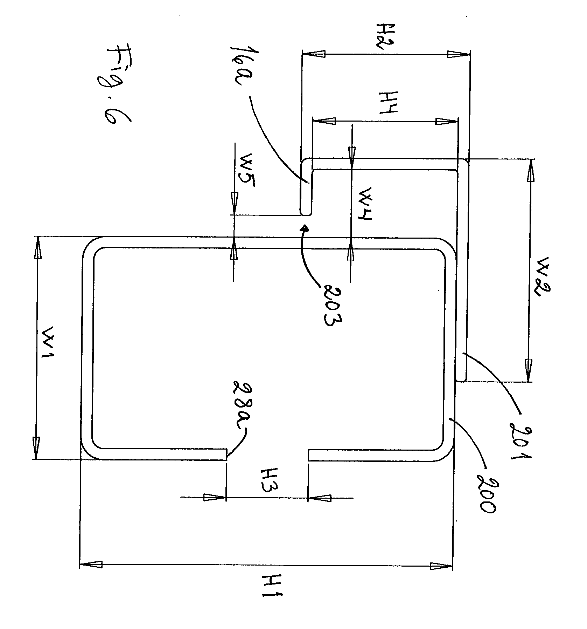

Fig. 6 shows a cross section of a support profile 11a similar to that of Figs. 3 and 4. It is formed of two profiles, base part 200 and rail part 201, which are connected firmly together. The rail part 201 is arranged to fit for the counterpart 25a, 125a of the longitudinal edge 15a of a panel 12. The base part 200 has width W1 of 20-50 mm and height H1 of 30-100 mm. The rail part 201 has width W2 of 20-50 mm and height H2 of 15-50 mm. The base part 200 comprises on its backside a slot 28a for a screw or similar for fixing the support to vehicle chassis 6. The height H3 of the slot 28a is e.g. 6-20 mm. The rail part 201 is formed to comprise a rail 16a having an inner width W4 of 5-20 mm and an inner height H4 of 10-45 mm. A rail opening 203 with width W5 of 2-6 mm is formed between the base part and the rail part. The width W5 of the rail opening 203 is arranged somewhat, e.g. 0.3-1 mm larger than the thickness of the panel 12 near its longitudinal edge 15a. The panel 12 can have thickness of 1.5-5 mm, for example.

If a side guard system 1 according to the invention needs further support, e.g. due to the height of the panel 12, one or more additional supports may be needed. Typically, such an additional support needs no rail means or any other fixing to the panel. This kind of an additional support can e.g. be fixed only to the vertical beams 5 of Fig. 1. An additional support may be arranged approximately in the middle of the panel 12, i.e. between the first and second longitudinal support 11a, 11b. An additional support may be arranged on the backside of the panel 12 very close to the panel 12 or even into contact with the panel 12.

Only some advantageous embodiments of the invention are shown in the figures. The figures do not separately disclose all facts of secondary importance regarding the main idea of the invention, known as such or obvious as such for a person skilled in the art. For example. mounting of the side guard system onto the chassis of the vehicle may be performed in different ways known in the prior art. It is apparent to a person skilled in the art that the invention is not limited exclusively to the examples described above, but that the invention can vary within the scope of the claims presented below. The dependent claims present some possible embodiments of the invention, and they are not to be considered to restrict the scope of protection of the invention as such.

## Claims

1. A side guard system (1) for a vehicle (2), which system comprises
- first and second parallel longitudinal supports (11a, 11b) arranged at a distance from each other,
- a panel (12) arranged between the supports and attached to the supports at its longitudinal sides (15a, 15b),
- locking means (13a-d) arranged to releasably lock the panel (12) between the supports (11a, 11b),
**characterized in that** the supports (11a, 11b) comprise rail means (16a, 16b) and the panel comprises counterparts (25a, 25b, 125a, 125b) fitted for the rail means on its longitudinal sides (15a, 15b), and that the rail means, the counterparts and the locking means configure a movable fitting of the panel (12) in relation to the supports (11a, 11b) when the panel is locked between the supports.

2. Side guard system according to claim 1, **characterized in that** the panel (12) is arranged to be movable in relation to the supports (11a, 11b) in the longitudinal direction when the panel is locked between the supports.

3. Side guard system according to claim 1 or 2, **characterized in that** the panel (12) is arranged to be movable in relation to the supports (11a, 11b) in the direction perpendicular to the longitudinal direction when the panel is locked between the supports.

4. Side guard system according to any of the preceding claims, **characterized in that** the counterparts (25a, 25b, 125a, 125b) are one or more protrusions formed in the panel of the panel material.

5. Side guard system according to claim 4, **characterized in that** at least one of the counterparts is a longitudinal shape extending along substantially the whole longitudinal side of the panel (12).

6. Side guard system according to claim 4, **characterized in that** the counterparts (125a, 125b) of at least one side of the panel are snap-fit joint means, arranged fitting for the rail means.

7. Side guard system according to any of the preceding claims 1-6, **characterized in that** the locking means comprises an end piece (13a-d, 14a, 14b) adapted to be firmly fitted at the longitudinal end (18a, 18b) of the support.

8. Side guard system according to claim 7, **characterized in that** the end piece (13a-d, 14a, 14b) is attached to the support (11a, 11b) with a friction joint.

9. Side guard system according to claim 7 or 8, **characterized in that** the end piece (11a-d) is arranged to close the end of the rail means (16a, 16b) in the support.

10. Side guard system according to any of preceding claims 7-9, **characterized in that** the end piece (14a, 14b) comprises second rail means (19a) arranged fitting for sides (20a) of the panel perpendicular to the longitudinal direction, whereby the panel is arranged movable in relation to the end piece (14a, 14b) when the panel is locked between the supports.

11. A Method of assembling a side guard system (1) for a commercial vehicle (2), the method comprising following steps
- mounting a panel (12) between two parallel longitudinal supports (11a, 11b) arranged at a distance from each other,
- arranging counterparts (25a, 25b, 125a, 125b) on the longitudinal sides (15a, 15b) of the panel in rail means (16a, 16b) in the supports,
- locking the panel (12) between the supports (11a, 11b) into a movable fitting in relation to the supports (11a, 11b).

12. Method according to claim 11, **characterized in**
- sliding the counterparts (25a, 25b, 125a, 125b) in the rails (16a, 16b), thereby sliding the panel (12) between the supports (11a, 11b) with a longitudinal movement when the panel is not locked between the supports.

13. Method according to claim 11 or 12, **characterized in that** counterparts (125a, 125b) of at least one longitudinal side of the panel are snap-fit joint means, whereby the method comprises
- bringing the panel (12) into the movable fitting with the support (11a, 11b) with movement in a direction perpendicular to the longitudinal direction, by arranging the snap-fit joint means (125a, 125b) in connection with the rail (16a, 16b) means.

14. Method according to any of the preceding claims 11-13, **characterized in**
- locking the panel between the supports by fitting end pieces (13a, 13b, 13c, 13d) firmly at the longitudinal ends (18a, 18b) of the supports (11a, 11b).

15. Method according to claim 14, **characterized in**
- attaching the end pieces (13a-d) to the supports (11a, 11b) with a friction joint.
